# EUROPEAN PATENT SPECIFICATION

(11) **EP 3 615 816 B1**
(45) Date of publication and mention of the grant of the patent: **16.04.2025**
(21) Application number: 18727454.3
(22) Date of filing: 23.03.2018
(51) Int. Cl.: F16B 5/06, F16B 35/00, F16B 2/12, F16B 43/00

(54) **DEVICE FOR ASSEMBLING STRUCTURAL ELEMENTS**
VORRICHTUNG ZUR MONTAGE VON STRUKTURELEMENTEN
DISPOSITIF D'ASSEMBLAGE D'ÉLÉMENTS STRUCTURELS

(30) Priority: 28.04.2017 IT 201700045808
(43) Date of publication of application: 04.03.2020
(73) Proprietor: Leapfactory S.r.l., 10152 Torino (IT)
(72) Inventor: GENTILCORE, Luca, 10152 Torino (IT); TESTA, Stefano, 10152 Torino (IT)
(74) Representative: Garavelli, Paolo
(86) International application number: PCT/IT2018/000042
(87) International publication number: WO 2018/198144

(56) References cited:
- WO-A1-2009/145938
- WO-A1-2014/186710
- US-A1- 2014 369 787

## Description

The present invention refers to a device for assembling structural elements, in particular to a peg for assembling of wooden pre-fabricated elements used to make structural frameworks for buildings.

Several devices are known in the art for assembling structural elements, in particular devices for assembling wooden pre-fabricated elements, which generally provide for the use of pins or pegs, which work in shearing and are inserted with forced coupling inside calibrated holes, which can be obtained in a yard or prepared previously; these pins do not allow blocking the structural elements by working with compression: for this reason, screws are used, in addition to metallic structural plates, which are inserted inside holes and coupled with blots for mutually assembling the structure elements.

These known devices have the problem, in case of pegs, of not allowing to keep the structural elements joined with compression, while screws and bolts have the problem of projecting outside the structural elements, requiring further workings or the use of covering elements to obtain a finish of the assembling which does not impair the aesthetic appearance of the structure.

US-A1-2014/369787 discloses a device for assembling structural elements according to the most relevant prior art.

Object of the present invention is solving the above prior art problems, by providing a device for assembling structural elements which can be used without needing to use additional elements, such as bolts or metallic plates to assemble the structure and obtain a stable connection, and which allows at the same time to have a finishing with good quality and appealing from the aesthetic point of view.

The above and other objects and advantages of the invention, as will result from the following description, are obtained with a device for assembling structural elements as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:
- Figure 1 is an axonometric view of an example of a device for assembling structural elements; and
- Figure 2 is an axonometric view of an embodiment of a device for assembling structural elements according to the present invention.

With reference to the Figures, some preferred embodiments of the device for assembling structural elements of the present invention are shown and described.

The device 10 for assembling structural elements of the present invention comprises a pin 11 or peg, preferably of a cylindrical shape, having a first end connected to a first assembling element 15a and a second end connected to a second assembling element 15b, said first assembling element 15a and second assembling element 15b being adapted to keep the structural elements mutually assembled with compression, preferably pre-fabricated, for example made of wood, used to make structural frameworks.

The pin 11 of the device 10 for assembling structural elements is adapted to be assembled inserted inside holes obtained in the structural elements, preferably before installing in a yard.

The first assembling element 15a and the second assembling element 15b each comprise a projecting element 15, and are connected to the ends of the pin 11 through connecting means 12, composed for example of a screw screwed in a threading 18 made in the pin 11.

The projecting elements 15 of the first assembling element 15a and of the second assembling element 15b are adapted to keep the structural elements mutually assembled with compression; the projecting element 15 has preferably a reduced thickness, for example less than 4 mm, shaped as a disk.

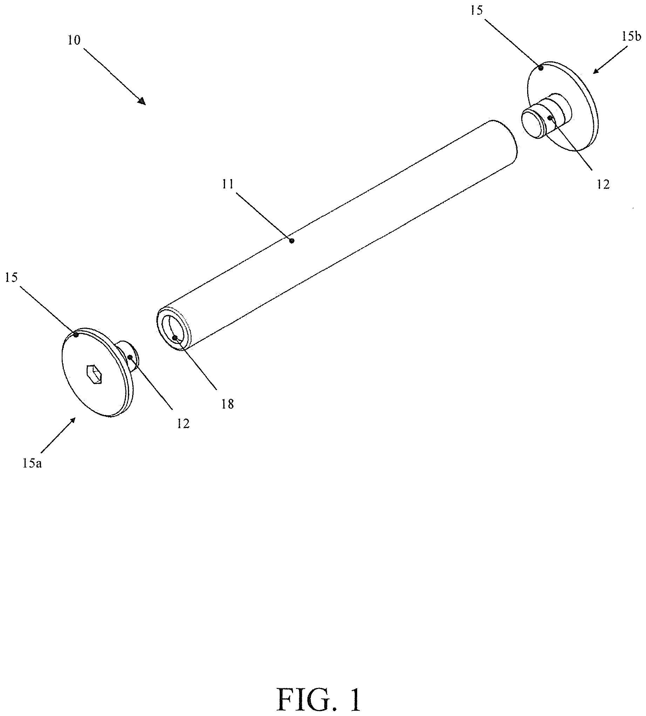

In an example of the device 10 according to the present invention shown in Figure 1, the first assembling element 15a and the second assembling element 15b each comprise the projecting element 15 and the connecting means 12, obtained in a single piece.

For example, the connecting means 12 are composed of a screw screwed in a threading 18 made in the pin 11, and the projecting element 15 is the screw head.

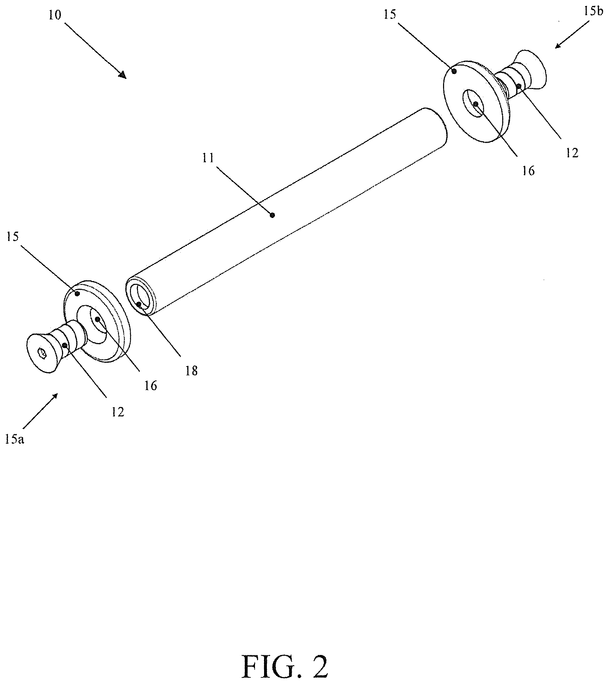

In an embodiment of the device 10 according to the present invention shown in Figure 2, the first assembling element 15a and the second assembling element 15b each comprise the projecting element 15 and the connecting means 12, obtained in two parts.

The connecting means 12 are composed of a screw screwed in a threading 18 made in the pin 11, and the projecting element 15 is a drilled washer, having a hole 16 inside which the screw 12 is inserted to fasten the washer 15 onto the pin 11.

The washer 15 further comprises a recess to prevent the screw 12 from projecting from the washer 15 when it is screwed in the threading 18.

When assembling pre-fabricated wooden structural elements to make structural frameworks of buildings, devices 10 according to the invention are used by inserting the pins 11 inside holes obtained in the structural elements and fastening to each one of them a first assembling element 15a and a second assembling element 15b.

In the thereby obtained framework, the structural elements are kept mutually assembled due to the compression force exerted by the assembling elements 15a, 15b, in particular by the projecting elements 15, for example composed of the screw head 15, in the device 10 according to the first embodiment of the invention, or by the washer 15 in the device 10 according to the second embodiment of the invention; the structural elements are further kept mutually assembled due to the resistance force to shearing exerted by the pins 11.

Advantageously the device 10 for assembling structural elements according to the present invention allows assembling structural elements without the need of using additional elements such as bolts or metallic plates, obtaining a stable connection, and allows at the same time to have a finishing of the part projecting from the structural element with good quality and appealing from the aesthetic point of view, due to its reduced thickness.

## Claims

1. Device (10) for assembling structural elements comprising a pin (11) adapted to be assembled, inserted inside holes obtained in the structural elements, said pin (11) having a first end connected to a first assembling element (15a) and a second end connected to a second assembling element (15b), said first assembling element (15a) and second assembling element (15b) being adapted to keep the structural elements mutually assembled with compression, such structural elements being used to make structural frameworks, the first assembling element (15a) and the second assembling element (15b) each comprising a projecting element (15), and being connected to the ends of the pin (11) through connecting means (12), said projecting elements (15) of the first assembling element (15a) and of the second assembling element (15b) being adapted to keep the structural elements mutually assembled with compression, the first assembling element (15a) and the second assembling element (15b) each comprising the projecting element (15) and the connecting means (12) obtained in two parts, the connecting means (12) of the first assembling element (15a) and of the second assembling element (15b) being each composed of a screw respectively screwed in a threading (18) made in the first end and the second end of the pin (11), and the projecting element (15) being a drilled washer (15), having a hole (16) inside which each screw (12) is inserted to fasten the washer (15) on the first end and the second end of the pin (11), the washers (15) further comprising a recess to prevent the screws (12) from projecting from the washers (15) when they are screwed in the threading (18), the projecting element (15) being shaped as a disk.

2. Device (10) for assembling structural elements according to claim 1, **characterized in that** the pin (11) has a cylindrical shape.

## Patentansprüche

1. Vorrichtung (10) zum Zusammenbau von Strukturelementen, umfassend einen Stift (11), der montiert werden kann und in in die Strukturelemente eingebrachte Löcher eingesetzt wird, wobei der Stift (11) ein erstes Ende aufweist, das mit einer ersten Stützelementanordnung (15a) verbunden ist ein zweites Ende, das mit einem zweiten Montageelement (15b) verbunden ist, wobei das erste Montageelement (15a) und das zweite Montageelement (15b) geeignet sind, sie zusammengebaut zu halten durch Komprimieren der Strukturelemente, wobei die Strukturelemente zur Bildung von Strukturrahmen verwendet werden, wobei das erste Montageelement (15a) und das zweite Montageelement (15b) jeweils ein vorstehendes Element (15) umfassen und mit den Enden des Stifts verbunden werden (11) mittels Verbindungsmittel (12), wobei die vorstehenden Elemente (15) des ersten Montageelements (15a) und des zweiten Montageelements (15b) dazu geeignet sind, die zusammengebauten Elemente durch Kompression zusammenzuhalten strukturell, wobei das erste Montageelement (15a) und das zweite Montageelement (15b) jeweils das hervorstehende Element (15) und die Verbindungsmittel (12) umfassen, die aus zwei Teilen bestehen, wobei die Verbindungsmittel (12) des ersten Montageelements (15a) und das zweite Montageelement (15b), die jeweils aus einer Schraube bestehen, die jeweils in ein Gewinde (18) eingeschraubt ist, das im ersten Ende und im zweiten Ende des Stifts (11) angebracht ist, und das hervorstehende Element (15) eine perforierte Unterlegscheibe (15) mit einem Loch (16) ist, in das jede Schraube (12) eingeführt wird, um die Unterlegscheibe (15) am ersten Ende und am zweiten Ende des Stifts (11) zu befestigen, wobei die Unterlegscheiben (15) außerdem eine Aussparung aufweisen, um zu verhindern, dass die Schrauben (12) aus den Unterlegscheiben (15) herausragen, wenn sie in das Gewinde (18), das vorstehende Element, eingeschraubt werden (15) scheibenförmig sein.

2. Vorrichtung (10) zum Zusammenbau von Bauelementen nach Anspruch 1, **dadurch gekennzeichnet, dass** der Stift (11) eine zylindrische Form aufweist.

## Revendications

1. Dispositif (10) d'assemblage d'éléments de structure comprenant une broche (11) susceptible d'être montée, insérée à l'intérieur de trous pratiqués dans les éléments de structure, ladite broche (11) ayant une première extrémité reliée à un premier ensemble d'éléments de support (15a) et une seconde extrémité reliée à un second élément d'assemblage (15b), lesdits premier élément d'assemblage (15a) et second élément d'assemblage (15b) étant adaptés pour les maintenir assemblés par compression des éléments de structure, lesdits éléments de structure étant utilisés pour créer des cadres de structure, le premier élément d'assemblage (15a) et le deuxième élément d'assemblage (15b) comportant chacun un élément en saillie (15), et étant reliés aux extrémités de la broche (11) au moyen de moyens de liaison (12), lesdits éléments saillants (15) du premier élément d'assemblage (15a) et du deuxième élément d'assemblage (15b) étant adaptés au maintien des éléments assemblés entre eux par compression structurel, le premier élément d'assemblage (15a) et le deuxième élément d'assemblage (15b) comprenant chacun l'élément saillant (15) et les moyens de connexion (12) réalisés en deux parties, les moyens de connexion (12) du premier élément d'assemblage (15a) et le deuxième élément d'assemblage (15b) constitués chacun d'une vis respectivement vissée dans un filetage (18) réalisé dans la première extrémité et dans la deuxième extrémité de la broche (11), et l'élément saillant (15) étant une rondelle perforée (15), comportant un trou (16) dans lequel est insérée chaque vis (12) pour fixer la rondelle (15) sur la première extrémité et sur la deuxième extrémité de la broche (11), les rondelles (15) comprenant en outre un relief pour empêcher les vis (12) de dépasser des rondelles (15) lorsqu'elles sont vissées dans le filetage (18), l'élément saillant (15) étant en forme de disque.

2. Dispositif (10) d'assemblage d'éléments de structure selon la revendication 1, **caractérisé par le fait que** la broche (11) a une forme cylindrique.
